(19) Europäisches Patentamt
European Patent Office
Office européen des brevets

(11) **EP 4 092 645 B1**

(12) **EUROPÄISCHE PATENTSCHRIFT**

(45) Veröffentlichungstag und Bekanntmachung des Hinweises auf die Patenterteilung:
**08.01.2025 Patentblatt 2025/02**

(21) Anmeldenummer: **22159123.3**

(22) Anmeldetag: **28.02.2022**

(51) Internationale Patentklassifikation (IPC):
**G08B 17/113** *(2006.01)* **G08B 17/10** *(2006.01)*

(52) Gemeinsame Patentklassifikation (CPC):
**G08B 17/10; G08B 17/113**

(54) **ERHÖHUNG DER ANSAUGLEISTUNG BEI EINEM ANSAUGRAUCHMELDER (ASD) ZUR VERKÜRZUNG DER TRANSPORTZEIT AB EINEM DETEKTIERTEN MINDESTSIGNALPEGELWERT OHNE AUSGABE EINER UNTERBRUCHSMELDUNG**

INCREASE IN THE SUCTION PERFORMANCE OF AN INTAKE SMOKE ALARM (ASD) TO SHORTEN THE TRANSPORT TIME FROM A DETECTED MINIMUM SIGNAL LEVEL VALUE WITHOUT OUTPUT OF AN INTERRUPTION MESSAGE

AUGMENTATION DE LA PUISSANCE D'ASPIRATION POUR UN DÉTECTEUR DE FUMÉE PAR ASPIRATION (ASD) PERMETTANT DE RÉDUIRE LE TEMPS DE TRANSPORT À UNE VALEUR DE NIVEAU DE SIGNAL MINIMUM DÉTECTÉ SANS ÉMETTRE DE MESSAGE D'INTERRUPTION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.05.2021 EP 21174278**

(43) Veröffentlichungstag der Anmeldung:
**23.11.2022 Patentblatt 2022/47**

(73) Patentinhaber: **Siemens Schweiz AG**
**8047 Zürich (CH)**

(72) Erfinder: **Fischer, Martin**
**8180 Bülach (CH)**

(74) Vertreter: **Siemens Patent Attorneys**
**Postfach 22 16 34**
**80506 München (DE)**

(56) Entgegenhaltungen:
**EP-A1- 1 638 062     EP-A1- 2 244 236**
**EP-A1- 2 407 946     EP-A2- 1 006 500**

**Beschreibung**

Die Erfindung betrifft ein Verfahren zum Betrieb eines Ansaugrauchmelders, einen derartigen Ansaugrauchmelder sowie ein Computerprogrammprodukt zur Durchführung des erfindungsgemässen Betriebsverfahrens. Derartige Ansaugrauchmelder oder auch Ansaugbrandmelder werden in der Fachsprache auch als ASD bezeichnet (für Aspirated Smoke Detector).

Bei dem Verfahren ist der Ansaugrauchmelder zur Detektion eines Brandes in einem zu überwachenden Raum und zur Ausgabe eines Brandalarms in einem detektierten Brandfall vorgesehen, typischerweise an eine Brandmeldezentrale (BMZ). Hierbei wird Raumluft mittels einer Ansaugeinheit des Ansaugrauchmelders über ein mit Ansaugöffnungen für zu detektierenden Rauch oder für zu detektierendes Brandgas versehenes Ansaugrohr des Ansaugrauchmelders angesaugt und einer Branddetektoreinheit des Ansaugrauchmelders zur messtechnischen Bestimmung eines Signalpegels einer Brandkenngrösse zugeführt. Es wird die Ansaugleistung der Ansaugeinheit zur Erzeugung eines Luftstroms durch das Ansaugrohr auf einen Nennluftstromwert für den Normalbetrieb, d.h. auf einen für den Normalbetrieb vorgesehenen Nennluftstromwert, eingestellt. Schliesslich wird die Ansaugleistung ab einem Mindestsignalpegelwert des Signalpegels erhöht, um die Transportzeit von angesaugter Raumluft mit Rauch und/oder Brandgas durch das Ansaugrohr hindurch bis zur Branddetektoreinheit zu verkürzen.

Der hier betrachtete Ansaugrauchmelder umfasst zumindest eine Branddetektoreinheit zur messtechnischen Bestimmung eines Signalpegels einer Brandkenngrösse, eine Ansaugeinheit, eine Leistungsansteuereinheit zum Einstellen der Ansaugleistung der Ansaugeinheit und ein an der Ansaugeinheit angeschlossenes, mit Ansaugöffnungen versehenes Ansaugrohr zum Ansaugen von Raumluft mit zu detektierendem Rauch und/oder Brandgas. Weiter umfasst der Ansaugrauchmelder einen Luftstrommesser, insbesondere einen Durchflussmesser, zur Erfassung eines Luftstroms der angesaugten Raumluft sowie eine mit der Branddetektoreinheit, mit dem Luftstrommesser und mit der Leistungsansteuereinheit verbundene elektronische Steuereinheit. Letztere ist dazu eingerichtet, die Ansaugleistung der Ansaugeinheit mittels der Leistungsansteuereinheit auf einen Nennluftstromwert für den Normalbetrieb einzustellen, die Ansaugleistung ab einem Mindestsignalpegelwert mittels der Leistungsansteuereinheit zur Verkürzung der Transportzeit zu erhöhen und in einem detektierten Brandfall einen Brandalarm auszugeben. Die Ansaugeinheit und die Branddetektoreinheit bilden typischerweise eine Baueinheit.

Ein derartiges Verfahren und ein derartiger Ansaugrauchmelder sind aus der EP 2 244 236 A1 bekannt. Durch die Erhöhung der der Lüfterdrehzahl und somit durch die Erhöhung der Ansaugleistung verkürzt sich die Transportzeit von angesaugter Raumluft mit Rauch durch das Ansaugrohr hindurch bis zur Branddetektoreinheit. Dadurch ist eine schnellere Branddetektion möglich.

Aus der EP 2 407 946 A1 der Anmelderin ist ein Verfahren sowie ein dazu korrespondierender Ansaugrauchmelder zum Erkennen von Verstopfungen und Unterbrüchen in einem Rohrsystem bekannt. Es wird Luft mittels eines Lüfters über das Rohrsystem aus zu überwachenden Räumen und Einrichtungen angesaugt und auf Brandkenngrössen hin überwacht. Es werden der Luftstrom zumindest eines Teils der angesaugten Luft und die Lufttemperatur gemessen. Es wird eine Verstopfungsmeldung ausgegeben, wenn der Luftstrom einen vorgegebenen unteren Grenzwert unterschreitet, und/oder es wird eine Unterbruchmeldung ausgegeben, wenn der Luftstrom einen vorgegebenen oberen Grenzwert überschreitet. Es wird die Drehzahl des Lüfters mit zunehmender Lufttemperatur erhöht und mit abnehmender Lufttemperatur erniedrigt.

Mit «Luftstrom» ist der Luftvolumenstrom $\dot{V}$ oder der Luftmassenstrom $\dot{m}$ bezeichnet. Er ist somit eine zeitabhängige physikalische Grösse. Luftvolumenstrom $\dot{V}$ und Luftmassenstrom $\dot{m}$ sind gemäss der physikalischen Beziehung $\dot{m} = \rho \cdot \dot{V}$ über die Dichte $\rho$ miteinander verknüpft.

Mit «Normalbetrieb» ist der brandfreie bzw. rauchfreie Normalbetrieb gemeint. Er liegt z.B. nach der Inbetriebnahme oder nach der Wartung eines Ansaugrauchmelders vor.

Mit «Ansaugrohr» ist generell ein Rohrsystem oder auch ein Schlauchsystem bezeichnet. Das Ansaugrohr kann einziges Rohr, vorzugsweise aus einem Kunststoff, oder mehrere Teilrohre umfassen, die z.B. mittels eines Rohrverteilers aufgesplittet sind. Das Ansaugrohr weist typischerweise einen kreisförmigen Querschnitt mit einem Durchmesser im Bereich von 1 cm bis 5 cm, vorzugsweise im Bereich von 2 cm bis 3 cm, auf. Insbesondere weist das Ansaugrohr eine Mindestrohrlänge von 30 m, vorzugsweise von 50 m auf. Entlang des Ansaugrohrs ist eine Vielzahl von Ansaugöffnungen vorhanden bzw. dort eingebracht. Sie können in einem gleichen Abstand entlang des Ansaugrohrs vorhanden sein, wie z.B. in einem Abstand von 4 m bis 8 m.

Der messtechnisch zu bestimmende Signalpegel einer Brandkenngrösse ist typischerweise ein Konzentrationspegel bzw. ein Konzentrationswert von detektiertem Rauch oder von einem detektierten Brandgas als mögliche Brandkenngrösse. Rauch enthält dabei Rauchteilchen unterschiedlicher Teilchengrösse, die auch als Rauchaerosole bezeichnet werden. Ein typisches Brandgas ist z.B. Kohlenstoffmonoxid oder Ammoniak. Die Branddetektoreinheit kann eine optische Detektoreinheit, wie z.B. nach dem Streulichtprinzip oder nach dem Durchlichtprinzip, oder einen für Brandgase sensitiven Gassensor, wie z.B. einen CO-Gassensor, aufweisen. Der Mindestsignalpegelwert ist insbesondere so bemessen, dass eine ausreichend hohe Wahrscheinlichkeit für ein mögliches Brandereignis besteht, d.h. signifikant für ein mögliches Brandereignis ist. Die Festlegung des Mindestsignalpegelwert kann auf Erfahrungswerte aus einem ähnlichen Umfeld der Brandüberwachung basieren oder messtechnisch durch einen Brandtest vorort erfolgen.

Der messtechnisch zu bestimmende Signalpegel einer Brandkenngrösse ist typischerweise ein Konzentrationspegel bzw. ein Konzentrationswert von detektiertem Rauch oder von einem detektierten Brandgas als mögliche Brandkenngrösse. Der Mindestsignalpegelwert ist insbesondere so bemessen, dass eine ausreichend hohe Wahrscheinlichkeit für ein mögliches Brandereignis besteht, d.h. signifikant für ein mögliches Brandereignis ist. Die Ansaugeinheit - typischerweise ein Lüfter - und die Branddetektoreinheit sind üblicherweise, aber nicht notwendigerweise in einem gemeinsamen Gehäuse als Baueinheit untergebracht. In Strömungsrichtung gesehen kann die Ansaugeinheit der Branddetektoreinheit vor- oder nachgeschaltet sein. Die Branddetektoreinheit kann eine optische Detektoreinheit nach dem Streulicht- oder Durchlichtprinzip und/oder eine Gassensoreinheit für Brandgase aufweisen.

Ansaugrauchmelder verfügen zumeist über einen Lüfter (Aspirator). Dieser saugt über ein Ansaugrohr Luftproben aus Räumen ab und führt sie einem Branddetektoreinheit zu. Die Ansaugrohre können sich dabei über mehrere 100 m hinweg erstrecken. Angesaugter Rauch ist daher über die ganze Länge bis zur Branddetektoreinheit zu detektieren. Die hierfür benötigte Zeit wird auch als Totzeit oder als Transportzeit bezeichnet. Für lange Ansaugrohre kann die Transportzeit im Minutenbereich liegen. So liegt die maximale Transportzeit bei einer Rohrlänge von 200 m, bei einer mittleren Strömungsgeschwindigkeit von 1 m/s und bei einer Rauchansaugung an einem der Branddetektoreinheit entfernten Rohrende bei 200 Sekunden.

Üblicherweise berechnet ein «ASD-Planer» die wesentlichen Parameter, damit ein Ansaugrauchmelder die hierfür relevanten Normen erfüllt, wie z.B. die für Europa einschlägige Norm EN 54-20, hier in der für den Zeitpunkt der vorliegenden Patentanmeldung gültigen Fassung vom Februar 2009, oder die für Nordamerika einschlägige Norm UL268, vorzugsweise ab dem 6. oder 7. Ausgabestand. Dabei spielen verschiedene Parameter eine Rolle, wie z.B. die Rohrlänge, die Raumgrösse, die Anzahl der Ansaugöffnungen, der Ansaugdruck und die Sensitivität der Branddetektoreinheit. Für die technische Auslegung eines Ansaugrauchmelders sind verschiedene softwaregestützte Projektierungswerkzeuge bekannt, wie z.B. das Projektierungswerkzeug ASYST von der Fa. Siemens. Sobald die Parameter ermittelt sind, werden von einem Techniker das Ansaugrohr zusammengesetzt, Ansaugöffnungen in Form von Löchern in das Ansaugrohr gebohrt und die Branddetektoreinheit entsprechend den Vorgaben konfiguriert.

Typischerweise wird auch die Ansaugleistung des Lüfters über die eingestellte Drehzahl eingestellt, um einen Luftstrom mit einem Nennluftstromwert durch das Ansaugrohr einzustellen. Diese Drehzahl bleibt dann im rauch- bzw. brandfreien Normalbetrieb über die Lebenszeit des Detektors konstant. In diesem Normalbetrieb ist ein Ansaugrauchmelder somit mit geringer Lüftergeschwindigkeit parametriert, um dessen Lebensdauer zu verlängern und um den Geräuschpegel bei der Ansaugung zu minimieren. Grund der statischen Einstellung ist die Detektion von Unterbrüchen mit einer einhergehenden Zunahme des Luftstroms oder die Detektion von Verstopfungen der Ansaugöffnungen durch Verschmutzung mit einer einhergehenden Abnahme des Luftstroms im Laufe der Betriebszeit des Ansaugrauchmelders. Sobald der Luftstrom z.B. gemäss der genannten EN 54-20 um $\pm$ 20 % vom Nennluftstromwert abweicht, ist vom Ansaugrauchmelder innerhalb einer in der Norm vorgegebenen Zeit von 300 Sekunden eine Störung auszugeben. Bei der Norm UL268, vorzugsweise ab dem 6. oder 7. Ausgabestand, gelten 90 Sekunden anstelle der vorgenannten 300 Sekunden. Der Nennluftstromwert, gemessen in Liter pro Sekunde oder in Liter pro Minute, wird typischerweise bei der Inbetriebnahme eines Ansaugrauchmelders eingestellt.

Ausgehend von der eingangs genannten EP 2 407 946 A1 ist es eine Aufgabe der vorliegenden Erfindung, ein verbessertes Verfahren zum Betrieb eines Ansaugrauchmelders anzugeben.

Es ist eine weitere Aufgabe der Erfindung, ein zuverlässigeres Verfahren zum Betrieb eines Ansaugrauchmelders anzugeben.

Es ist eine weitere Aufgabe der Erfindung einen verbesserten Ansaugrauchmelder anzugeben. Schliesslich ist es ist eine Aufgabe der Erfindung einen Ansaugrauchmelder anzugeben, welcher im Betrieb zuverlässiger arbeitet.

Die Aufgabe der Erfindung wird mit den Gegenständen der unabhängigen Patentansprüche gelöst. Vorteilhafte Verfahrensvarianten und Ausführungsformen der vorliegenden Erfindung sind in den abhängigen Ansprüchen angegeben.

Erfindungsgemäss wird für das Verfahren im brandfreien bzw. rauchfreien Normalbetrieb eine Unterbruchsmeldung ausgegeben, wenn der Luftstrom für einen Mindestzeitraum lang einen oberen Grenzwert überschreitet. Dabei wird unabhängig davon die Ansaugleistung ab dem Mindestsignalpegelwert, d.h. mit dem Überschreiten des Mindestsignalpegelwerts, insbesondere zur Verkürzung der Transportzeit nur für eine Zeitspanne kleiner als der Mindestzeitraum lang erhöht, in welcher der Luftstrom den oberen Grenzwert überschreitet.

Mit anderen Worten wird die Ansaugleistung zur Verkürzung der Transportzeit nur innerhalb des Mindestzeitraums derart erhöht, dass der Luftstrom den oberen Grenzwert überschreitet.

Durch die gezielte leistungsmässige zeitlich begrenzte Erhöhung der Ansaugleistung wird vorteilhaft erreicht, dass zusätzlich zur schneller möglichen Branddetektion die Ausgabe einer fälschlichen Unterbruchsmeldung unterbunden wird. Eine unnötige Inspektion des Ansaugrauchmelders durch eine Servicefachmann wird vermieden. Dennoch beeinträchtigt das erfindungsgemässe Verfahren nicht die in der eingangs beschriebenen beispielhaften Norm vorgeschriebene und unabhängig von der Branddetektion arbeitende Überwachung des Ansaugrauchmelders auf einen Unterbruch und auf eine Verstopfung hin.

Mit der Rückkehr zum Normalbetrieb geht die durch die erhöhte Ansaugleistung bedingte Geräuschwicklung und die durch die Erhöhung bedingte mechanische, lebensdauerverkürzende Überbeanspruchung des Ansaugrauchmelders wieder zurück.

Wird bei dem erfindungsgemässen Verfahren die Ansaugleistung derart erhöht, dass der Luftstrom den Nennluftstromwert z.B. um das 1.2- fache bis 5-fache, vorzugsweise um das 2- bis 3-fache, übersteigt, so erfolgt dennoch keine Ausgabe der Unterbruchsmeldung, wenn diese Erhöhung zeitlich auf den Mindestzeitraum ab dem Zeitpunkt der Überschreitung des oberen Grenzwertes begrenzt ist.

Mit anderen Worten wird die Ansaugleistung der Ansaugeinheit vor Erreichen des Endes des Mindestzeitraums, insbesondere kurz vor Erreichen des Endes des Mindestzeitraums, derart erniedrigt, dass der Luftstrom den oberen Grenzwert wieder unterschreitet. Die Erniedrigung der Ansaugleistung erfolgt insbesondere in einer Zeitspanne von 1 s bis 20 s, vorzugsweise von 5 s bis 10 s, vor dem Ablauf des Mindestzeitraums. Dadurch wird ein Zeitglied in der Steuerung des Ansaugrauchmelders wieder zurückgesetzt. Es kann im Anschluss wieder mit der Erhöhung der Ansaugleistung über den oberen Grenzwert hinweg begonnen werden, ohne dass eine Ausgabe der Unterbruchsmeldung erfolgt.

Nach einer weiteren Verfahrensvariante wird die Ansaugleistung nur für eine Zeitspanne kleiner als der Mindestzeitraum lang erhöht, in welcher der Luftstrom den oberen Grenzwert überschreitet, und zwar wenn von einer übergeordneten Brandmeldezentrale oder Leitstelle eine Warnmeldung, insbesondere ein Achtungs- oder Aufmerksamkeitssignal, empfangen wird, wie z.B. über eine Melder- oder Busleitung, welche die übergeordnete Brandzentrale oder Leitstelle mit dem Ansaugrauchmelder verbindet. Alternativ kann die Verbindung zwischen Ansaugrauchmelder und Brandmeldezentrale bzw. Leitstelle drahtlos erfolgen, wie z.B. über eine WLAN-, Bluetooth- oder über eine mobile 3G-, 4G- oder 5G-Datenverbindung. Die zuvor genannten (Daten-)Verbindungen können auch auf einem Internet-Protokoll basieren. Die Brandmeldezentrale oder die Leitstelle können auch als Cloud-Applikation in einer Cloud-Infrastruktur realisiert sein. In diesem Sinne kann der Ansaugrauchmelder die Warnmeldung «über die Cloud» von einer übergeordneten Cloud-Brandmeldezentrale oder Cloud-Leitstelle empfangen. Die Warnmeldung wird dann ausgegeben, wenn z.B. von zumindest einem weiteren Ansaugrauchmelder in der Umgebung dieses Ansaugrauchmelders bereits ein Brandalarm oder ein sich anbahnender Brand z.B. in Form eines Voralarms an die Brandmeldezentrale oder an die Leitstelle gemeldet worden ist. Durch die örtliche Korrelation ist die Wahrscheinlichkeit eines tatsächlichen Brandes im Umfeld der installierten Ansaugrauchmelder erhöht. Eine «vorauseilende» Erhöhung der Ansaugleistung ist in diesem Fall für eine möglichst frühe Branddetektion vorteilhaft gerechtfertigt.

Einer weiteren Verfahrensvariante zufolge wird eine Verstopfungsmeldung ausgegeben, wenn der Luftstrom einen unteren Grenzwert für einen Mindestzeitraum lang unterschreitet.

Nach einer weiteren Verfahrensvariante ist der obere Grenzwert für den Luftstrom auf das 1.2-fache des Nennluftstromwert festgelegt. Alternativ oder zusätzlich ist der untere Grenzwert für den Luftstrom insbesondere auf das 0.8-fache des Nennluftstromwert festgelegt. Weiter alternativ oder zusätzlich ist der Mindestzeitraum insbesondere auf einen Wert im Bereich von 60 Sekunden bis 600 Sekunden, vorzugsweise auf einen Wert von 90 Sekunden oder 300 Sekunden bzw. auf einen Wert von 90 Sekunden $\pm$ 3 Sekunden oder 300 Sekunden $\pm$ 3 Sekunden festgelegt.

Nach einer besonders vorteilhaften Verfahrensvariante sind der obere und untere Grenzwert für den Luftstrom in Bezug auf den Nennluftstromwert sowie ein Zeitdauerwert für den Mindestzeitraum durch eine nationale, regionale oder internationale Norm festgelegt, insbesondere durch die Europäische Norm EN 54-20, vorzugsweise mit Ausgabestand Februar 2009.

Erfindungsgemäss wird die Aufgabe der Erfindung durch einen Ansaugrauchmelder gelöst, bei dem die elektronische Steuereinheit zudem dazu eingerichtet bzw. programmiert ist, eine für den Normalbetrieb vorgesehene Unterbruchsmeldung auszugeben, falls der erfasste Luftstrom einen vorgegebenen oberen Grenzwert für einen Mindestzeitraum lang überschreitet. Zudem ist die Steuereinheit eingerichtet bzw. programmiert, die Ansaugleistung (mittels der Leistungsansteuereinheit) ab dem Mindestsignalpegelwert, d.h. mit dem Überschreiten des Mindestsignalpegelwerts, nur für eine Zeitspanne kleiner als der Mindestzeitraum lang zu erhöhen, in welcher der Luftstrom den oberen Grenzwert überschreitet.

Mit anderen Worten ist die Steuereinheit dazu eingerichtet bzw. programmiert, die Ansaugleistung ab dem Mindestsignalpegelwert, d.h. mit dem Überschreiten des Mindestsignalpegelwerts, mittels der Leistungsansteuereinheit nur innerhalb des Mindestzeitraums derart zu erhöhen, dass der eingestellte Luftstrom den oberen Grenzwert überschreitet.

Mittels der durch die Steuereinheit über die Leistungsansteuereinheit bewirkten gezielten leistungsmässigen und zeitlich begrenzten Erhöhung der Ansaugleistung wird vorteilhaft erreicht, dass zusätzlich zur schneller möglichen Branddetektion mittels der Branddetektoreinheit die Ausgabe einer fälschlichen Unterbruchsmeldung unterbunden wird.

Mit der Rückkehr zum Normalbetrieb geht die durch die erhöhte Ansaugleistung bedingte Geräuschwicklung und die durch die Erhöhung bedingte mechanische, lebensdauerverkürzende Überbeanspruchung des Ansaugrauchmelders wieder zurück.

Erfolgt gemäss des erfindungsgemässen Ansaugrauchmelders die Erhöhung der Ansaugleistung derart, dass der Luftstrom den Nennluftstromwert z.B. um das 1.2-fache bis 5-fache, vorzugsweise um das 2- bis 3-fache, übersteigt, so erfolgt dennoch keine Ausgabe der Unterbruchsmeldung, wenn diese Erhöhung zeitlich auf den Mindestzeitraum ab dem Zeitpunkt der Überschreitung des oberen Grenzwertes begrenzt ist. Die Erniedrigung der Ansaugleistung erfolgt insbesondere in einer Zeitspanne von 1 s bis 20 s, vorzugsweise von 5 s bis 10 s, vor dem Ablauf des Mindestzeitraums. Dadurch wird ein Zeitglied in der Steuerung des Ansaugrauchmelders wieder zurückgesetzt. Die Steuereinheit kann zudem dazu eingerichtet sein, nach der Erniedrigung der Ansaugleistung wieder mit der Erhöhung der Ansaugleistung über den oberen Grenzwert hinweg zu beginnen, ohne dass eine Ausgabe der Unterbruchsmeldung erfolgt.

Nach einer Ausführungsform des Ansaugrauchmelders weist der Ansaugrauchmelder eine mit der Steuereinheit verbundene Kommunikationsschnittstelle aufweist. Die Steuereinheit ist dazu eingerichtet, im Falle des Empfangs einer Warnmeldung von der Kommunikationsschnittstelle, insbesondere eines Achtungs- oder Aufmerksamkeitssignals, die Ansaugleistung der Ansaugeinheit zur Verkürzung der Transportzeit zu erhöhen. Mit anderen Worten ist die Steuereinheit in diesem Falle dazu eingerichtet oder programmiert, die Ansaugleistung nur für eine Zeitspanne kleiner als der Mindestzeitraum zu erhöhen, in welcher der Luftstrom den oberen Grenzwert überschreitet. Die Kommunikationsschnittstelle kann z.B. eine kabelgebundene Kommunikationsschnittstelle zum Anschluss einer Melder- oder Busleitung sein, welche die übergeordnete Brandzentrale oder Leitstelle mit dem Ansaugrauchmelder verbindet. Alternativ kann die Kommunikationsschnittstelle eine drahtlose Kommunikationsschnittstelle sein, wie z.B. eine WLAN-, Bluetooth- oder eine mobile 3G-, 4G- oder 5G-Datenschnittstelle. Die zuvor genannte Kommunikationsschnittstelle kann z.B. auf einem Internet-Protokoll basieren.

Nach einer Ausführungsform ist die Steuereinheit dazu eingerichtet, die Ansaugleistung insbesondere kurz vor Erreichen des Endes des Mindestzeitraums mittels der Leistungsansteuereinheit derart zu erniedrigen, dass der Luftstrom den oberen Grenzwert wieder unterschreitet. Mit «kurz vor Erreichen des Mindestzeitraums» ist eine Zeitspanne von 1 s bis 20 s, vorzugsweise von 5 s bis 10 s, vor dem Ablauf des Mindestzeitraums gemeint.

Einer weiteren Ausführungsform zufolge ist die Steuereinheit des Ansaugrauchmelders dazu eingerichtet oder programmiert, den Signalpegel der Brandkenngrösse dahingehend zu analysieren und zu bewerten, ob ein Brandereignis vorliegt oder nicht. Sie ist zudem eingerichtet oder programmiert, die Ansaugleistung der Ansaugeinheit nach Beendigung der Analyse und Bewertung sowie unabhängig vom Mindestzeitraum derart zu reduzieren, dass der Luftstrom den oberen Grenzwert wieder unterschreitet, insbesondere dass sich der Luftstrom wieder auf den Nennluftstromwert einstellt. Für den Fall, dass kein Brandereignis detektierbar ist, befindet sich der Ansaugrauchmelder wieder im Normalbetrieb.

Einer weiteren Ausführungsform zufolge ist die elektronische Steuereinheit dazu eingerichtet bzw. programmiert, eine Verstopfungsmeldung auszugeben, falls der erfasste Luftstrom einen vorgegebenen unteren Grenzwert für einen vorgegebenen Mindestzeitraum unterschreitet.

Wie eingangs beschrieben, ist mit «Luftstrom» der Luftvolumenstrom $\dot{V}$ oder der Luftmassenstrom $\dot{m}$ bezeichnet. Letztere sind gemäss der physikalischen Beziehung $\dot{m} = \rho \cdot \dot{V}$ über die Dichte $\rho$ miteinander verknüpft. Die Dichte $\rho$ ist gemäss der physikalischen Beziehung

$$\rho = \frac{p}{R_f \cdot T}$$

mit dem Luftdruck $p$, mit der Gaskonstante $R_f$ für die Luft und mit der Lufttemperatur $T$ verknüpft. Die Dichte $\rho$ ist somit proportional zum Luftdruck $p$ und umgekehrt proportional zur Lufttemperatur $T$.

Für das erfindungsgemässe Betriebsverfahren sowie für den erfindungsgemässen Ansaugrauchmelder kann prinzipiell angenommen werden, dass die Dichte $\rho$ während des Normalbetriebs des Ansaugrauchmelders im Wesentlichen konstant ist, d.h. sich um weniger als 3 %, insbesondere um weniger als 2 % ändert. Solche Dichteänderungen haben somit keinen praktischen Einfluss auf die Luftstromüberwachung für den Ansaugrauchmelder. Der Luftvolumenstrom ist z.B. mittels eines Flügelrad-Anemometers als Durchflussmesser messbar. Dabei ist der Luftvolumenstrom aus der gemessenen mittleren Strömungsgeschwindigkeit mal dem bekannten Rohrinnenquerschnitt ermittelbar.

Alternativ ist der Luftvolumenstrom z.B. mittels eines thermischen Luftstromsensors, wie z.B. mittels eines Hitzedrahtanemometers, messbar, dessen Ausgangssignal jedoch ein Mass für den Luftmassenstrom $\dot{m}$ ist. Sind keine nennenswerte Änderungen bei der Umgebungstemperatur, beim Luftdruck oder bei der Luftfeuchtigkeit in der angesaugten Raumluft zu erwarten, so ist ein unkompensierter thermischer Luftstromsensor als Durchflussmesser einsetzbar. In anspruchsvollerer Einsatzumgebung des Ansaugrauchmelders, wie z.B. mit hohen Schwankungen der Umgebungstemperatur und/oder der Luftfeuchtigkeit, kann ein derartiger thermischer Luftstrommesser eine Kompensationseinrichtung umfassen, wie sie in der eingangs genannten EP 2 407 946 A1 beschrieben ist. Zur Berücksichtigung einer erfassten Lufttemperatur, eines erfassten Luftdrucks und/oder einer erfassten Luftfeuchte kann die Kompensationseinrichtung einen Temperatursensor und ggf. einen Drucksensor oder Feuchtsensor aufweisen. Ein derartig kompensierter thermischer Luftstromsensor kann daher als Durchflussmesser fungieren. Ein entsprechender Temperatur-, Luftdruck- oder Luftfeuchtesensor kann bzw. können in der Ansaugeinheit oder im thermischen Hitzedrahtanemometer selbst integriert sein.

Nach einer Ausführungsform weist die elektronische Steuereinheit für einen datentechnischen Zugriff auf den oberen und unteren Grenzwert sowie auf den Nennluftstromwert und auf den Mindestzeitraum einen nichtflüchtigen Speicher auf. Der obere Grenzwert beträgt das 1.2-fache und der untere Grenzwert das 0.8-fache des gespeicherten Nennluftstromwerts. Der Mindestzeitraum ist insbesondere auf einen Wert im Bereich von 60 Sekunden bis 600 Sekunden, vorzugsweise auf einen Wert von 90 Sekunden oder 300 Sekunden bzw. auf einen Wert von 90 Sekunden $\pm$ 3 Sekunden oder 300 Sekunden $\pm$ 3 Sekunden festgelegt. Der nichtflüchtige Speicher ist z.B. ein EPROM.

Alternativ können der obere und untere Grenzwert sowie der Mindestzeitraum in einer nationalen, regionalen oder internationalen Norm festgelegt sein, wie z.B. durch die Norm EN 54-20, vorzugsweise mit Ausgabestand vom Februar 2009.

Schliesslich kann die Ansaugeinheit des erfindungsgemässen Ansaugrauchmelders ein Lüfter oder Ventilator sein, dessen Ansaugleistung mit zunehmender Drehzahl n des Lüfters zunimmt.

Vorzugsweise ist die elektronische Steuereinheit ein Mikrocontroller, welcher üblicherweise "sowieso" zur gesamten Steuerung des Ansaugrauchmelders vorhanden bzw. erforderlich ist. Weiterhin kann der Mikrocontroller einen oder mehrere integrierte A/D-Umsetzer zur messtechnischen Erfassung der zuvor beschriebenen Eingangsgrössen wie Luftvolumenstrom, Luftmassenstrom, Signalpegel sowie ggf. von Lufttemperatur, Luftdruck und Luftfeuchtigkeit aufweisen. Er kann zudem analoge und/oder digitale Ein- und Ausgabeeinheiten (I/O) sowie Kommunikationsschnittstellen zur Ausgabe eines Brandalarms, einer Unterbruchsmeldung oder einer Verstopfungsmeldung aufweisen. Im Mikrocontroller können der obere und untere Grenzwert für den Luftstrom, der Nennluftstromwert, Mindestzeitraum sowie der Mindestsignalpegelwert in einem nichtflüchtigen Speicher (EPROM) des Mikrocontrollers gespeichert sein. Darüber hinaus können die Leistungsansteuereinheit und/oder elektronische Komponenten für die Signalaufbereitung oder Signalverarbeitung der zuvor genannten Eingangsgrössen bereits im Mikrocontroller integriert sein.

Die Aufgabe der Erfindung wird schliesslich durch ein Computerprogrammprodukt zur Durchführung des erfindungsgemässen Betriebsverfahrens auf einer elektronischen Steuereinheit, insbesondere auf einem Mikrocontroller, eines Ansaugrauchmelders gelöst. Die elektronische Steuereinheit umfasst einen elektronischen Speicher, wie z.B. einen RAM oder EPROM, zur Speicherung des Computerprogrammprodukts sowie zur Speicherung des Mindestsignalpegelwertes und des Nennluftstromwertes als Betriebsparameter. Gegebenenfalls können der obere Grenzwerte für den Luftstrom, der untere Grenzwertes für den Luftstrom und/oder der Mindestzeitraum als weitere Betriebsparameter im elektronischen Speicher gespeichert sein.

Das Computerprogrammprodukt ist insbesondere eine elektronische Datei, die in den elektronischen Speicher der elektronischen Steuereinheit geladen werden kann. Das Computerprogrammprodukt kann z.B. auf einem optischen oder magnetischen Speichermedium gespeichert sein, wie z.B. auf einer CD, DVD oder Bluray-Disk, oder auf einer magnetischen Festplatte. Das Computerprogrammprodukt kann alternativ auf einem Speicherstick, wie z.B. auf einem USB-Stick, gespeichert sein. Schliesslich kann das Computerprogrammprodukt auch über ein Intranet oder über das Internet als Download zumindest mittelbar in den elektronischen Speicher der elektronischen Steuereinheit geladen werden.

Dadurch kann die durch die Erfindung mögliche schnellere Branddetektion durch ein Update der Betriebssoftware der elektronischen Steuereinheit auch bei bereits installierten Ansaugrauchmeldern vorteilhaft «nachgerüstet» werden kann.

Die Erfindung sowie vorteilhafte Ausführungen der vorliegenden Erfindung werden am Beispiel der nachfolgenden Figuren erläutert. Dabei zeigen:

FIG 1    ein beispielhaften Aufbau eines Ansaugrauchmelders im rauchfreien Normalbetrieb,

FIG 2    das Beispiel gemäss FIG 1 im Falle eines detektierten Brandes, und

FIG 3    ein Beispiel für einen Ansaugrauchmelder gemäss der Erfindung.

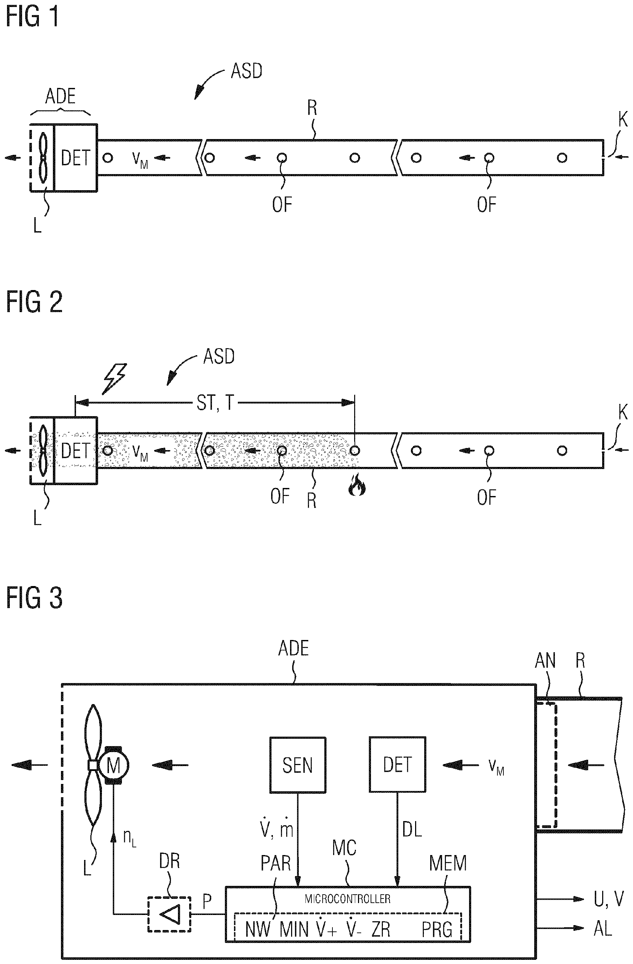

FIG 1 zeigt ein beispielhaften Aufbau eines Ansaugrauchmelders ASD im rauchfreien Normalbetrieb. Links ist eine Ansaug-/Detektoreinheit ADE als Baueinheit zu sehen, an welcher ein Ansaugrohr R mit einer Vielzahl verteilt angeordneter Ansaugöffnungen OF angeschlossen ist. Letztere sind üblicherweise Bohrungen, die in das Ansaugrohr R eingebracht sind. Die Ansaugöffnungen OF weisen typischerweise einen nicht einheitlichen Querschnitt auf, um bei allen Ansaugöffnungen OF eine im Wesentlichen gleiche «Lochsensitivität» zu erzielen. D.h. im Normalbetrieb saugt jede der Ansaugöffnungen OF in etwa das gleiche Ansaugvolumen pro Zeiteinheit an. Mit K ist ein an einem rechten Rohrende vorhandenes Kalibrierloch bezeichnet. Die im linken Teil der FIG 1 gezeigte Ansaug-/Detektoreinheit ADE umfasst eine Ansaugeinheit L in Form eines Lüfters, wie z.B. einen Radiallüfter, sowie eine in Strömungsrichtung vorgeschaltete Branddetektoreinheit DET. Mit $v_M$ ist die mittlere Strömungsgeschwindigkeit bezeichnet. Der durch die Ansaugeinheit L angesaugte Luftstrom bzw. Luftvolumenstrom entspricht dabei dem Volumen pro Zeit aus dem Produkt aus mittlerer Strömungsgeschwindigkeit $v_M$ und aus dem Rohrinnenquerschnitt des Ansaugrohrs R.

FIG 2 zeigt das Beispiel gemäss FIG 1 im Falle eines detektierten Brandes. Es wird dabei an einer Ansaugöffnung OF, symbolisiert durch ein Flammenzeichen, Raumluft mit zu detektierendem Rauch angesaugt und durch das Ansaugrohr R hindurch bis zur Branddetektoreinheit DET transportiert. Das Blitzzeichen an der Branddetektoreinheit DET symbolisiert ein detektiertes Brandereignis. Dies ist dann der Fall, wenn ein von der Branddetektoreinheit DET ausgegebenes Detektionssignal DL einen vorgegebenen Mindestdetektionspegel MIN überschreitet. Im Beispiel der FIG 2 ist zu sehen, wie die angesaugte Raumluft eine Transport- oder Rohrstrecke ST mit Rauch füllt. Mit T ist eine zugehörige Transportzeit bezeichnet. Die Transportzeit T ergibt sich dabei aus dem Produkt aus mittlerer Strömungsgeschwindigkeit $v_M$ und aus der eingezeichneten Transportstrecke ST. Wie eingangs beschrieben, kann die Transportzeit T bis zu mehreren Minuten betragen.

FIG 3 zeigt ein Beispiel für einen Ansaugrauchmelder ASD gemäss der Erfindung. Es ist der funktionale Aufbau der Ansaug-/Detektoreinheit ADE im Detail dargestellt. Im rechten Teil der als Baueinheit realisierten Ansaug-/Detektoreinheit ADE ist ein Rohranschluss AN zu sehen, an dem das Ansaugrohr R angeschlossen ist. Die Ansaug-/Detektoreinheit ADE selbst umfasst die Branddetektoreinheit DET zur messtechnischen Bestimmung des Signalpegels DL einer Brandkenngrösse. Letztere ist im vorliegenden Beispiel ein Rauchkonzentrationspegel. Der Ansaugrauchmelder ASD bzw. die Ansaug-/Detektoreinheit ADE umfasst weiter eine Leistungsansteuereinheit DR, die zum Einstellen einer Ansaugleistung P der Ansaugeinheit L eingerichtet ist. Im vorliegenden Fall ist die Ansaugeinheit L ein Lüfter, dessen Ansaugleistung P über eine Änderung der Lüfterdrehzahl $n_L$ eingestellt werden kann. Zudem weist der Ansaugrauchmelder ASD bzw. die Ansaug-/Detektoreinheit ADE einen Luftstrommesser SEN zur Erfassung eines Luftstroms $\dot{V}, \dot{m}$ der angesaugten Raumluft auf. Der Luftstrom ist ein Luftvolumenstrom $\dot{V}$ oder ein Luftmassenstrom $\dot{m}$. Der Luftstrommesser SEN gibt dabei ein entsprechendes Luftstrommesssignal aus, welches den Luftvolumenstrom $\dot{V}$ bzw. den Luftmassenstrom $\dot{m}$ repräsentiert.

Weiterhin weist der Ansaugrauchmelder ASD bzw. die Ansaug-/Detektoreinheit ADE eine mit der Branddetektoreinheit DET, mit dem Luftstrommesser SEN und mit der Leistungsansteuereinheit DR verbundene elektronische Steuereinheit MC auf. Letztere ist typischerweise ein Mikrocontroller und dazu eingerichtet bzw. programmiert, die Ansaugleistung P der Ansaugeinheit L mittels der Leistungsansteuereinheit DR auf einen Nennluftstromwert NW für den (rauchfreien) Normalbetrieb einzustellen. Die Einstellung der Ansaugleistung P kann in Form einer offenen oder geschlossenen Regelschleife erfolgen, basierend auf einem aktuell erfassten Luftvolumenstrom $\dot{V}$ bzw. Luftmassenstrom $\dot{m}$ im Vergleich mit dem in einem elektronischen Speicher MEM der Steuereinheit MC hinterlegten Nennluftstromwert NW. Die Steuereinheit MC ist weiter dazu eingerichtet, in einem detektierten Brandfall einen Brandalarm AL auszugeben sowie dazu eingerichtet, im Normalbetrieb eine Unterbruchsmeldung U auszugeben, falls der erfasste Luftstrom $\dot{V}, \dot{m}$ einen vorgegebenen oberen Grenzwert $\dot{V}+, \dot{m}+$ für einen Mindestzeitraum ZR überschreitet. Der Brandalarm AL sowie gegebenenfalls die Unterbruchsmeldung U und eine Verstopfungsmeldung V können mittels der elektronischen Steuereinheit MC z.B. an einer Busschnittstelle der Ansaug-/Detektoreinheit ADE ausgegeben werden.

Die Steuereinheit MC ist zudem dazu eingerichtet bzw. programmiert, die Ansaugleistung P mittels der Leistungsansteuereinheit DR ab einem Mindestsignalpegelwert MIN des Signalpegels DL, d.h. mit Überschreiten des Mindestsignalpegelwerts SIG, zu erhöhen, um die Transportzeit T von angesaugter Raumluft mit Rauch und/oder mit Brandgas durch das Ansaugrohr R hindurch bis zur Branddetektoreinheit DET zu verkürzen.

Gemäss der Erfindung ist die elektronische Steuereinheit MC dazu eingerichtet , die Ansaugleistung P ab dem Mindestsignalpegelwert MIN nur für eine Zeitspanne kleiner als der Mindestzeitraum ZR lang zu erhöhen, in welcher der Luftstrom $\dot{V}, \dot{m}$ den oberen Grenzwert $\dot{V}+, \dot{m}+$ überschreitet. Mit anderen Worten kann die elektronische Steuereinheit MC dazu eingerichtet bzw. programmiert sein, die Ansaugleistung P mittels der Leistungsansteuereinheit DR (kurz) vor Erreichen des Endes des Mindestzeitraums ZR derart zu erniedrigen, dass der Luftstrom $\dot{V}, \dot{m}$ den oberen Grenzwert $\dot{V}+, \dot{m}+$ wieder unterschreitet.

Darüber hinaus kann die elektronische Steuereinheit MC dazu eingerichtet sein, eine Verstopfungsmeldung V auszugeben, falls der erfasste Luftstrom $\dot{V}, \dot{m}$ einen vorgegebenen unteren Grenzwert $\dot{V}-, \dot{m}-$ für einen vorgegebenen Mindestzeitraum ZR unterschreitet. Auch dieser unter Grenzwert $\dot{V}-, \dot{m}-$ kann im elektronischen Speicher MEM für einen rechnerischen Vergleich durch die Steuereinheit MC hinterlegt sein.

Schliesslich können ein Computerprogrammprodukt PRG sowie der Mindestsignalpegelwert MIN und der Nennluftstromwert NW als Betriebsparameter PAR, sowie gegebenenfalls der obere und untere Grenzwert $\dot{V}+, \dot{m}+; \dot{V}-, \dot{m}-$ für den Luftstrom $\dot{V}, \dot{m}$ und/oder der Mindestzeitraum ZR als weitere Betriebsparameter PAR im elektronischen Speicher MEM der elektronischen Steuereinheit MC vorzugsweise nichtflüchtig gespeichert sein. Das Computerprogrammprodukt PRG ist dabei zur Durchführung des erfindungsgemässen Betriebsverfahrens auf einer elektronischen Steuereinheit MC, vorzugsweise auf einem prozessorgestützten Mikrocontroller, des Ansaugrauchmelders ASD eingerichtet. Es umfasst entsprechende geeignete Programmschritte sowie Programmroutinen zum Betrieb, d.h. zur Steuerung und Kontrolle, des Ansaugrauchmelders ASD.

Bezugszeichenliste

| | |
|---|---|
| ADE | Ansaug-/Detektoreinheit |
| AL | Brandalarm, Alarm |
| AN | Rohranschluss, Stutzen |
| ASD | Ansaugrauchmelder |
| DET | Branddetektoreinheit |
| DL | Signalpegel |
| DR | Leistungsansteuereinheit, Treiber |
| K | Kalibrierloch |
| L | Ansaugeinheit, Lüfter, Pumpe |
| MC | elektronische Steuereinheit, Mikrocontroller |
| MEM | Speicher, elektronischer Speicher, EPROM |
| MIN | Mindestsignalpegel |
| $n_L$ | Lüfterdrehzahl |
| NW | Nennluftstromwert |
| OF | Ansaugöffnung, Bohrung |
| P | Ansaugleistung |
| PAR | Betriebsparameter |
| R | Ansaugrohr, Rohrsystem |
| SEN | Luftvolumenmesser, Durchflussmesser, Luftmassenmesser |
| ST | Transportstrecke |
| T | Transportzeit |
| U | Unterbruchsmeldung |
| V | Verstopfungsmeldung |
| $v_M$ | mittlere Luftströmungsgeschwindigkeit |
| ZR | Zeitraum |
| $\dot{m}$ | Luftmassenstrom |
| $\dot{V}$ | Luftvolumenstrom |
| $\dot{m}+$ | oberer Grenzwert |
| $\dot{m}-$ | unterer Grenzwert |

**Patentansprüche**

1. Verfahren zum Betrieb eines Ansaugrauchmelders (ASD), wobei der Ansaugrauchmelder (ASD) zur Detektion eines Brandes in einem zu überwachenden Raum und zur Ausgabe eines Brandalarms (AL) in einem detektierten Brandfall vorgesehen ist, wobei Raumluft mittels einer Ansaugeinheit (L) des Ansaugrauchmelders (ASD) über ein mit Ansaugöffnungen (OF) für zu detektierenden Rauch oder für zu detektierendes Brandgas versehenes Ansaugrohr (R) des Ansaugrauchmelders (ASD) angesaugt und einer Branddetektoreinheit (DET) des Ansaugrauchmelders (ASD) zur messtechnischen Bestimmung eines Signalpegels (DL) einer Brandkenngrösse zugeführt wird, und wobei für den Normalbetrieb die Ansaugleistung (P) der Ansaugeinheit (L) zur Erzeugung eines Luftstroms ($\dot{V}, \dot{m}$) durch das Ansaugrohr (R) auf einen Nennluftstromwert (NW) eingestellt wird, und wobei die Ansaugleistung (P) ab einem Mindestsignalpegelwert (MIN) des Signalpegels (DL) erhöht wird, um die Transportzeit (T) von angesaugter Raumluft mit Rauch und/oder Brandgas durch das Ansaugrohr (R) hindurch bis zur Branddetektoreinheit (DET) zu verkürzen, **dadurch gekennzeichnet,**

   - **dass** eine für den Normalbetrieb vorgesehene Unterbruchsmeldung (U) ausgegeben wird, wenn der Luftstrom ($\dot{V}, \dot{m}$) für einen Mindestzeitraum (ZR) lang einen oberen Grenzwert ($\dot{V}+, \dot{m}+$) überschreitet, und
   - **dass** unabhängig davon die Ansaugleistung (P) ab dem Mindestsignalpegelwert (MIN) nur für eine Zeitspanne kleiner als der Mindestzeitraum (ZR) lang erhöht wird, in welcher der Luftstrom ($\dot{V}, \dot{m}$) den oberen Grenzwert ($\dot{V}+, \dot{m}+$) überschreitet.

2. Verfahren nach Anspruch 1, wobei die Ansaugleistung (P) der Ansaugeinheit (L) zur Verkürzung der Transportzeit (T) erhöht wird, wenn von einer übergeordneten Brandmeldezentrale oder Leitstelle eine Warnmeldung, insbesondere ein Achtungs- oder Aufmerksamkeitssignal, empfangen wird.

3. Verfahren nach Anspruch 1 oder 2, wobei der Signalpegel (DL) der Brandkenngrösse dahingehend analysiert und bewertet wird, ob ein Brandereignis vorliegt oder nicht, und wobei die Ansaugleistung (P) der Ansaugeinheit (L) nach Beendigung der Analyse und Bewertung sowie unabhängig vom Mindestzeitraum (ZR) derart reduziert wird, dass der Luftstrom ($\dot{V}, \dot{m}$) den oberen Grenzwert ($\dot{V}+, \dot{m}+$) wieder unterschreitet, insbesondere dass sich der Luftstrom ($\dot{V}, \dot{m}$) wieder auf den Nennluftstromwert (NW) eingestellt.

4. Verfahren nach einem der vorherigen Ansprüche, wobei eine Verstopfungsmeldung (V) ausgegeben wird, wenn der Luftstrom ($\dot{V}, \dot{m}$) einen unteren Grenzwert ($\dot{V}-, \dot{m}-$) für einen Mindestzeitraum (ZR) unterschreitet.

5. Verfahren nach Anspruch 4, wobei der obere Grenzwert ($\dot{V}+, \dot{m}+$) für den Luftstrom ($\dot{V}, \dot{m}$) auf das 1.2-fache des Nennluftstromwert (NW) festgelegt ist, wobei der untere Grenzwert ($\dot{V}-, \dot{m}-$) für den Luftstrom ($\dot{V}, \dot{m}$) auf das 0.8-fache des Nennluftstromwert (NW) festgelegt ist und wobei der Mindestzeitraum (ZR) auf einen Zeitdauerwert von 90 Sekunden oder 300 Sekunden festgelegt ist.

6. Verfahren nach Anspruch 4, wobei der obere und untere Grenzwert ($\dot{V}+, \dot{m}+; \dot{V}-, \dot{m}-$) für den Luftstrom ($\dot{V}, \dot{m}$) in Bezug auf den Nennluftstromwert (NW) sowie ein Zeitdauerwert für den Mindestzeitraum (ZR) durch eine nationale, regionale oder internationale Norm festgelegt sind, vor allem durch die Europäische Norm EN 54-20, vorzugsweise mit Ausgabestand vom Februar 2009, oder durch die Norm UL268, vorzugsweise ab dem 6. oder 7. Ausgabestand.

7. Ansaugrauchmelder (ASD), welcher zumindest aufweist,

- eine Branddetektoreinheit (DET) zur messtechnischen Bestimmung eines Signalpegels (DL) einer Brandkenngrösse,
- eine Ansaugeinheit (L),
- eine Leistungsansteuereinheit (DR) zum Einstellen einer Ansaugleistung (P) der Ansaugeinheit (L),
- ein an der Ansaugeinheit (L) angeschlossenes, mit Ansaugöffnungen (OF) versehenes Ansaugrohr (R) zum Ansaugen von Raumluft mit zu detektierendem Rauch und/oder mit zu detektierendem Brandgas,
- ein Luftstrommesser (SEN), insbesondere ein Durchflussmesser, zur Erfassung eines Luftstroms ($\dot{V}, \dot{m}$) der angesaugten Raumluft, und
- eine mit der Branddetektoreinheit (DET), mit dem Luftstrommesser (SEN) und mit der Leistungsansteuereinheit (DR) verbundene elektronische Steuereinheit (MC), dazu eingerichtet, die Ansaugleistung (P) der Ansaugeinheit (L) mittels der Leistungsansteuereinheit (DR) auf einen Nennluftstromwert (NW) für den Normalbetrieb einzustellen, die Ansaugleistung (P) ab einem detektierten Mindestsignalpegelwert (MIN) mittels der Leistungsansteuereinheit (DR) zur Verkürzung der Transportzeit (T) zu erhöhen und in einem detektierten Brandfall einen Brandalarm (AL) auszugeben, **dadurch gekennzeichnet,**
- **dass** die Steuereinheit (MC) dazu eingerichtet ist, eine für den Normalbetrieb vorgesehene Unterbruchsmeldung (U) auszugeben, falls der erfasste Luftstrom ($\dot{V}, \dot{m}$) einen vorgegebenen oberen Grenzwert ($\dot{V}+, \dot{m}+$) für einen Mindestzeitraum (ZR) lang überschreitet, und
- **dass** die Steuereinheit (MC) dazu eingerichtet ist, die Ansaugleistung (P) ab dem Mindestsignalpegelwert (MIN) nur für eine Zeitspanne kleiner als der Mindestzeitraum (ZR) lang zu erhöhen, in welcher der Luftstrom ($\dot{V}, \dot{m}$) den oberen Grenzwert ($\dot{V}+, \dot{m}+$) überschreitet.

8. Ansaugrauchmelder (ASD) nach Anspruch 7, wobei der Ansaugrauchmelder (ASD) eine mit der Steuereinheit (MC) verbundene Kommunikationsschnittstelle aufweist und wobei die Steuereinheit (MC) dazu eingerichtet ist, im Falle des Empfangs einer Warnmeldung von der Kommunikationsschnittstelle, insbesondere eines Achtungs- oder Aufmerksamkeitssignals, die Ansaugleistung (P) der Ansaugeinheit (L) zur Verkürzung der Transportzeit (T) zu erhöhen.

9. Ansaugrauchmelder (ASD) nach Anspruch 7 oder 8, wobei die Steuereinheit (MC) dazu eingerichtet ist, die Ansaugleistung (P) insbesondere kurz vor Erreichen des Endes des Mindestzeitraums (ZR) mittels der Leistungsansteuereinheit (DR) derart zu erniedrigen, dass der Luftstrom ($\dot{V}, \dot{m}$) den oberen Grenzwert ($\dot{V}+, \dot{m}+$) wieder unterschreitet.

10. Ansaugrauchmelder (ASD) nach einem der Ansprüche 7 bis 9, wobei die elektronische Steuereinheit (MC) eingerichtet ist, den Signalpegel (DL) der Brandkenngrösse dahingehend zu analysieren und zu bewerten, ob ein Brandereignis vorliegt oder nicht, und dazu eingerichtet ist, die Ansaugleistung (P) der Ansaugeinheit (L) nach Beendigung der Analyse und Bewertung sowie unabhängig vom Mindestzeitraum (ZR) derart zu reduzieren, dass der Luftstrom ($\dot{V}, \dot{m}$) den oberen Grenzwert ($\dot{V}+, \dot{m}+$) wieder unterschreitet, insbesondere dass sich der Luftstrom ($\dot{V}, \dot{m}$) wieder auf den Nennluftstromwert (NW) einstellt.

11. Ansaugrauchmelder (ASD) nach einem der vorherigen Ansprüche 7 bis 10, wobei die elektronische Steuereinheit (MC) dazu eingerichtet ist, eine Verstopfungsmeldung (V) auszugeben, falls der erfasste Luftstrom ($\dot{V}, \dot{m}$) einen vorgegebenen unteren Grenzwert ($\dot{V}-, \dot{m}-$) für einen vorgegebenen Mindestzeitraum (ZR) unterschreitet.

12. Ansaugrauchmelder (ASD) nach Anspruch 11, wobei die elektronische Steuereinheit (MC) für einen datentechnischen Zugriff auf den oberen und unteren Grenzwert ($\dot{V}+, \dot{m}+; \dot{V}-, \dot{m}-$) sowie auf den Nennluftstromwert (NW) und auf den Mindestzeitraum (ZR) einen nichtflüchtigen Speicher (MEM) aufweist, wobei der obere Grenzwert ($\dot{V}+, \dot{m}+$) das 1.2-fache und der untere Grenzwert ($\dot{V}-, \dot{m}-$) das 0.8-fache des gespeicherten Nennluftstromwerts (NW) beträgt und wobei der Mindestzeitraum (ZR) einen Zeitdauerwert von 90 Sekunden oder 300 Sekunden aufweist.

13. Ansaugrauchmelder (ASD) nach Anspruch 11, wobei die elektronische Steuereinheit (MC) für einen datentechnischen Zugriff auf den oberen und unteren Grenzwert ($\dot{V}+, \dot{m}+; \dot{V}-, \dot{m}-$) in Bezug auf den Nennluftstromwert (NW) sowie auf den Mindestzeitraum (ZR) einen nichtflüchtigen Speicher aufweist, wobei der obere und untere Grenzwert ($\dot{V}+, \dot{m}+; \dot{V}-, \dot{m}-$) sowie der Mindestzeitraum (ZR) in einer nationalen, regionalen oder internationalen Norm festgelegt sind, vor allem durch die Europäische Norm EN 54-20, vorzugsweise mit Ausgabestand vom Februar 2009, oder durch die Norm UL268, vorzugsweise ab dem 6. oder 7. Ausgabestand.

14. Computerprogrammprodukt (PRG) zur Durchführung des Betriebsverfahrens nach einem der Ansprüche 1 bis 6 auf einer elektronischen Steuereinheit (MC) eines Ansaugrauchmelders (ASD), wobei die elektronische Steuereinheit (MC) einen elektronischen Speicher (MEM) zur Speicherung des Computerprogrammprodukts (PRG) sowie zur Speicherung des Mindestsignalpegelwertes (MIN) und des Nennluftstromwertes (NW) als Betriebsparameter (PAR), sowie gegebenenfalls zur Speicherung des oberen Grenzwertes ($\dot{V}+$, $\dot{m}+$) für den Luftstrom ($\dot{V}$, $\dot{m}$), des unteren Grenzwertes ($\dot{V}-$, $\dot{m}-$) für den Luftstrom ($\dot{V}$, $\dot{m}$) und/oder des Mindestzeitraums (ZR) als weitere Betriebsparameter (PAR) aufweist.

**Claims**

1. Method for operating an aspirating smoke detector (ASD), wherein the aspirating smoke detector (ASD) is provided for detecting a fire in a space to be monitored and for outputting a fire alarm (AL) in the event of a detected fire, wherein ambient air is aspirated by means of a suction unit (L) of the aspirating smoke detector (ASD) via a suction pipe (R) of the aspirating smoke detector (ASD) provided with suction openings (OF) for smoke or combustion gas to be detected, and is fed to a fire detector unit (DET) of the aspirating smoke detector (ASD) for determination by measurement of a signal level (DL) of a fire characteristic variable, and wherein for normal operation, the suction power (P) of the suction unit (L) is set to generate an airflow ($\dot{V}$, $\dot{m}$) through the suction pipe (R) to a nominal airflow value (NW), and wherein the suction power (P) is increased from a minimum signal level (MIN) of the signal level (DL) in order to shorten the transport time (T) of aspirated ambient air with smoke and/or combustion gas through the suction pipe (R) to the fire detector unit (DET), **characterised in that**

   - an interruption signal (U) provided for normal operation is output if the airflow ($\dot{V}$, $\dot{m}$) exceeds an upper limit value ($\dot{V}+$, $\dot{m}+$) for a minimum period (ZR), and
   - **in that** regardless thereof, the suction power (P) from the minimum signal level value (MIN) is increased only for a timespan smaller than the minimum period (ZR) in which the airflow ($\dot{V}$, $\dot{m}$) exceeds the upper limit value ($\dot{V}+$, $\dot{m}+$).

2. Method according to claim 1, wherein the suction power (P) of the suction unit (L) is increased to shorten the transport time (T) when a warning signal, in particular a prewarning or alert signal is received from a higher-level fire alarm control panel or command centre.

3. Method according to claim 1 or 2, wherein the signal level (DL) of the fire characteristic variable is analysed and evaluated as to whether a fire event exists or not, and wherein the suction power (P) of the suction unit (L) is reduced after completion of the analysis and evaluation and independently of the minimum period (ZR) such that the airflow ($\dot{V}$, $\dot{m}$) again falls below the upper limit value ($\dot{V}+$, $\dot{m}+$), in particular, such that the airflow ($\dot{V}$, $\dot{m}$) is set again to the nominal airflow value (NW).

4. Method according to one of the preceding claims, wherein a blockage signal (V) is output if the airflow ($\dot{V}$, $\dot{m}$) falls below a lower limit value ($\dot{V}-$, $\dot{m}-$) for a minimum period (ZR).

5. Method according to claim 4, wherein the upper limit value ($\dot{V}+$, $\dot{m}+$) for the airflow ($\dot{V}$, $\dot{m}$) is set to 1.2 times the nominal airflow value (NW), wherein the lower limit value ($\dot{V}-$, $\dot{m}-$) for the airflow ($\dot{V}$, $\dot{m}$) is set to 0.8 times the nominal airflow value (NW) and wherein the minimum period (ZR) is set to a duration of 90 seconds or 300 seconds.

6. Method according to claim 4, wherein the upper and lower limit value ($\dot{V}+$, $\dot{m}+$; $\dot{V}-$, $\dot{m}-$) for the airflow ($\dot{V}$, $\dot{m}$) in relation to the nominal airflow value (NW) and a duration value for the minimum period (ZR) are set according to a national, regional or international standard, primarily the European standard EN 54-20, preferably the version dated February 2009 or the standard UL268, preferably from the 6th or 7th issue.

7. Aspirating smoke detector (ASD), which has at least

   - a fire detector unit (DET) for determination by measurement of a signal level (DL) of a fire characteristic variable,
   - a suction unit (L),
   - a power control unit (DR) for setting a suction power (P) of the suction unit (L),
   - a suction pipe (R) connected to the suction unit (L) having suction openings (OF) for aspirating ambient air with smoke and/or combustion gas that is to be detected,
   - an airflow meter (SEN), in particular a flow meter, for acquiring an airflow ($\dot{V}$, $\dot{m}$) of the aspirated ambient air, and
   - an electronic control unit (MC) connected to the fire detector unit (DET), the airflow meter (SEN) and the power control unit (DR), configured to adjust the suction power (P) of the suction unit (L) by means of the power control unit (DR) to a nominal airflow value (NW) for normal operation, to increase the suction power (P) from a detected minimum signal level (MIN) by means of the power control unit (DR) to shorten the transport time (T) and to output a fire alarm (AL) in the event of a detected fire,

**characterised in that**

- the control unit (MC) is configured to output an interruption signal (U) provided for normal operation if the acquired airflow ($\dot{V}$, $\dot{m}$) exceeds a predetermined upper limit value ($\dot{V}+$, $\dot{m}+$) for a minimum period (ZR), and
- **in that** the control unit (MC) is configured to increase the suction power (P) from the minimum signal level value (MIN) only for a timespan shorter than the minimum period (ZR) in which the airflow ($\dot{V}$, $\dot{m}$) exceeds the upper limit value ($\dot{V}+$ , $\dot{m}+$).

8. Aspirating smoke detector (ASD) according to claim 7, wherein the aspirating smoke detector (ASD) has a communication interface connected to the control unit (MC) and wherein the control unit (MC) is configured, in the case of the reception of a warning signal from the communication interface, in particular a prewarning or alert signal, to increase the suction power (P) of the suction unit (L) in order to shorten the transport time (T).

9. Aspirating smoke detector (ASD) according to claim 7 or 8, wherein the control unit (MC) is configured to reduce the suction power (P) by means of the power control unit (DR) shortly before reaching the end of the minimum period (ZR) such that the airflow ($\dot{V}$, $\dot{m}$) again falls below the upper limit value ($\dot{V}+$, $\dot{m}+$).

10. Aspirating smoke detector (ASD) according to one of claims 7 to 9, wherein the electronic control unit (MC) is configured to analyse the signal level (DL) of the fire characteristic variable and to evaluate whether a fire event exists or not, and is configured to reduce the suction power (P) of the suction unit (L) after completion of the analysis and evaluation and independently of the minimum period (ZR) such that the airflow ($\dot{V}$, $\dot{m}$) again falls below the upper limit value ($\dot{V}+$, $\dot{m}+$), in particular, such that the airflow ($\dot{V}$, $\dot{m}$) is set again to the nominal airflow value (NW).

11. Aspirating smoke detector (ASD) according to one of preceding claims 7 to 10, wherein the electronic control unit (MC) is configured to output a blockage signal (V) if the acquired airflow ($\dot{V}$, $\dot{m}$) falls below a predetermined lower limit value ($\dot{V}-$, $\dot{m}-$) for a predetermined minimum period (ZR).

12. Aspirating smoke detector (ASD) according to claim 11, wherein for a data access to the upper and lower limit value ($\dot{V}+$, $\dot{m}+$; $\dot{V}-$, $\dot{m}-$) and the nominal airflow value (NW) and the minimum period (ZR), the electronic control unit (MC) has a non-volatile memory store (MEM), wherein the upper limit value ($\dot{V}+$, $\dot{m}+$) is 1.2 times and the lower limit value ($\dot{V}-$, $\dot{m}-$) is 0.8 times the stored nominal airflow value (NW) and wherein the minimum period (ZR) has a duration of 90 seconds or 300 seconds.

13. Aspirating smoke detector (ASD) according to claim 11, wherein the electronic control unit (MC) has a non-volatile memory store for a data access to the upper and lower limit value ($\dot{V}+$, $\dot{m}+$; $\dot{V}-$, $\dot{m}-$) in relation to the nominal airflow value (NW) and the minimum period (ZR), wherein the upper and lower limit value ($\dot{V}+$, $\dot{m}+$; $\dot{V}-$, $\dot{m}-$) and the minimum period (ZR) are set according to a national, regional or international standard, in particular the European standard EN 54-20, preferably the version dated February 2009 or the standard UL268, preferably from the 6th or 7th issue.

14. Computer program product (PRG) for carrying out the operating method according to one of claims 1 to 6 on an electronic control unit (MC) of an aspirating smoke detector (ASD), wherein the electronic control unit (MC) has an electronic memory store (MEM) for storing the computer program product (PRG) and for storing the minimum signal level (MIN) and the nominal airflow value (NW) as operating parameters (PAR), and possibly for storing the upper limit value ($\dot{V}+$, $\dot{m}+$ ) for the airflow ($\dot{V}$, $\dot{m}$), the lower limit value ($\dot{V}-$, $\dot{m}-$) for the airflow ($\dot{V}$, $\dot{m}$), and/or the minimum period (ZR) as further operating parameters (PAR).

**Revendications**

1. Procédé destiné au fonctionnement d'un détecteur de fumée à aspiration (ASD), dans lequel le détecteur de fumée à aspiration (ASD) est prévu pour la détection d'un incendie dans un espace à surveiller et pour l'émission d'une alarme incendie (AL) en cas d'incendie détecté, dans lequel l'air ambiant est aspiré au moyen d'une unité d'aspiration (L) du détecteur de fumée à aspiration (ASD) par l'intermédiaire d'un tuyau d'aspiration (R) du détecteur de fumée à aspiration (ASD) doté d'ouvertures d'aspiration (OF) pour de la fumée à détecter ou pour un gaz d'incendie à détecter et est acheminé à une unité de détecteur d'incendie (DET) du détecteur de fumée à aspiration (ASD) pour la détermination par la technique de mesure d'un niveau de signal (DL) d'une grandeur caractéristique d'incendie, et dans lequel pour le fonctionnement normal la puissance d'aspiration (P) de l'unité d'aspiration (L) est réglée à une valeur de flux d'air nominal (NW) pour la génération d'un flux d'air ($\dot{V}$, $\dot{m}$) à travers le tuyau d'aspiration (R), et dans lequel la puissance d'aspiration (P) est augmentée à partir d'une valeur de niveau de signal minimale (MIN) du niveau de signal (DL) pour raccourcir le temps de transport (T) de l'air ambiant aspiré avec de la fumée et/ou d'un gaz d'incendie à travers le tuyau d'aspiration (R) jusqu'à l'unité de détecteur d'incendie (DET), **caractérisé**

    - **en ce qu'**une notification d'interruption (U) prévue pour le fonctionnement normal est émise lorsque le flux d'air ($\dot{V}$, $\dot{m}$) est supérieur à une valeur limite supérieure ($\dot{V}+$, $\dot{m}+$) pour une durée minimale (ZR), et
    - **en ce qu'**indépendamment de cela la puissance d'aspiration (P) est augmentée à partir de la valeur de niveau de signal minimale (MIN) uniquement pour un laps de temps inférieur à la durée minimale (ZR) dans laquelle le flux d'air ($\dot{V}$, $\dot{m}$) est supérieur à la valeur limite supérieure ($\dot{V}+$, $\dot{m}+$).

2. Procédé selon la revendication 1, dans lequel la puissance d'aspiration (P) de l'unité d'aspiration (L) est augmentée pour le raccourcissement du temps de transport (T) lorsqu'un avertissement, en particulier un signal d'attention ou de vigilance, est reçu par un centre de détection d'incendie principal ou un poste de contrôle.

3. Procédé selon la revendication 1 ou 2, dans lequel le niveau de signal (DL) de la grandeur caractéristique d'incendie est à cet effet analysé et évalué pour déterminer si un événement d'incendie existe ou non, et dans lequel la puissance d'aspiration (P) de l'unité d'aspiration (L) après la fin de l'analyse et de l'évaluation ainsi qu'indépendamment de la durée minimale (ZR) est réduite de telle sorte que le flux d'air ($\dot{V}$, $\dot{m}$) repasse en dessous de la valeur limite supérieure ($\dot{V}+$, $\dot{m}+$), en particulier de telle sorte que le flux d'air ($\dot{V}$, $\dot{m}$) se règle de nouveau à la valeur de flux d'air nominal (NW).

4. Procédé selon l'une quelconque des revendications précédentes, dans lequel une notification d'engorgement (V) est émise lorsque le flux d'air ($\dot{V}$, $\dot{m}$) passe sous une valeur limite inférieure ($\dot{V}-$, $\dot{m}-$) pour une durée minimale (ZR) .

5. Procédé selon la revendication 4, dans lequel la valeur limite supérieure ($\dot{V}+$, $\dot{m}+$) pour le flux d'air ($\dot{V}$, $\dot{m}$) est fixée à 1,2 fois la valeur de flux d'air nominal (NW), dans lequel la valeur limite inférieure ($\dot{V}-$, $\dot{m}-$) pour le flux d'air ($\dot{V}$, $\dot{m}$) est fixée à 0,8 fois la valeur de flux d'air nominal (NW) et dans lequel la durée minimale (ZR) est fixée à une valeur de durée de 90 secondes ou 300 secondes.

6. Procédé selon la revendication 4, dans lequel la valeur limite supérieure et la valeur limite inférieure ($\dot{V}+$, $\dot{m}+$ ; $\dot{V}-$, $\dot{m}-$) pour le flux d'air ($\dot{V}$, $\dot{m}$) par rapport à la valeur de flux d'air nominal (NW) ainsi qu'une valeur de durée pour la durée minimale (ZR) sont fixées par le biais d'une norme nationale, régionale ou internationale, avant tout par le biais de la norme européenne EN 54-20, de préférence avec la version de février 2009, ou par le biais de la norme UL268, de préférence à partir de la sixième ou de la septième version.

7. Détecteur de fumée à aspiration (ASD), qui présente au moins

    - une unité de détecteur d'incendie (DET) destinée à la détermination par la technique de mesure d'un niveau de signal (DL) d'une grandeur caractéristique d'incendie,
    - une unité d'aspiration (L),
    - une unité de commande de puissance (DR) destinée au réglage d'une puissance d'aspiration (P) de l'unité d'aspiration (L),
    - un tuyau d'aspiration (R) raccordé à l'unité d'aspiration (L) et doté d'ouvertures d'aspiration (OF) destiné à l'aspiration de l'air ambiant avec de la fumée à détecter et/ou avec un gaz d'incendie à détecter,
    - un capteur de flux d'air (SEN), en particulier un capteur de débit, destiné à l'acquisition d'un flux d'air ($\dot{V}$, $\dot{m}$) de l'air ambiant aspiré,
    - une unité de commande électronique (MC) reliée à l'unité de détecteur d'incendie (DET), au capteur de flux d'air (SEN) et à l'unité de commande de puissance (DR), conçue pour régler la puissance d'aspiration (P) de l'unité d'aspiration (L) au moyen de l'unité de commande de puissance (DR) à une valeur de flux d'air nominal (NW) pour le fonctionnement normal, pour augmenter la puissance d'aspiration (P) à partir d'une valeur de niveau de signal minimale (MIN) détectée au moyen de l'unité de commande de puissance (DR) destinée au raccourcissement du temps de transport (T) et pour émettre une alarme incendie (AL) en cas d'incendie détecté, **caractérisé**
    - **en ce que** l'unité de commande (MC) est conçue pour émettre un avertissement d'interruption (U) prévu pour le fonctionnement normal dans le cas où le flux d'air acquis ($\dot{V}$, $\dot{m}$) est longtemps supérieur à une valeur limite supérieure ($\dot{V}+$, $\dot{m}+$) prédéfinie pour une durée minimale (ZR), et
    - **en ce que** l'unité de commande (MC) est conçue pour augmenter longtemps la puissance d'aspiration (P) à partir de la valeur de niveau de signal minimale (MIN) uniquement pour un laps de temps inférieur à la durée minimale (ZR), dans laquelle le flux d'air ($\dot{V}$, $\dot{m}$) est supérieur à la valeur limite supérieure ($\dot{V}+$, $\dot{m}+$).

8. Détecteur de fumée à aspiration (ASD) selon la revendication 7, dans lequel le détecteur de fumée à aspiration (ASD) présente une interface de communication reliée à l'unité de commande (MC) et dans lequel l'unité de commande (MC) est conçue pour augmenter la puissance d'aspiration (P) de l'unité d'aspiration (L) destinée au raccourcissement du temps de transport (T) en cas de réception d'une notification d'avertissement par l'interface de communication, en particulier d'un signal d'attention ou de vigilance.

9. Détecteur de fumée à aspiration (ASD) selon la revendication 7 ou 8, dans lequel l'unité de commande (MC) est conçue pour diminuer la puissance d'aspiration (P), en particulier peu de temps avant d'atteindre la fin de la durée minimale (ZR), au moyen de l'unité de commande de puissance (DR), de telle sorte que le flux d'air ($\dot{V}$, $\dot{m}$) redevient inférieur à la valeur limite supérieure ($\dot{V}+$, $\dot{m}+$).

10. Détecteur de fumée à aspiration (ASD) selon l'une quelconque des revendications 7 à 9, dans lequel l'unité de commande électronique (MC) est conçue pour analyser et pour évaluer le niveau de signal (DL) de la grandeur caractéristique d'incendie à cet effet si un événement d'incendie est présent ou non et est conçue pour réduire la puissance d'aspiration (P) de l'unité d'aspiration (L) après la fin de l'analyse et de l'évaluation ainsi qu'indépendamment de la durée minimale (ZR), de telle sorte que le flux d'air ($\dot{V}$, $\dot{m}$) redevient inférieur à la valeur limite supérieure ($\dot{V}+$, $\dot{m}+$), en particulier de telle sorte que le flux d'air (V, m) se règle de nouveau à la valeur de flux d'air nominal (NW).

11. Détecteur de fumée à aspiration (ASD) selon l'une quelconque des revendications précédentes 7 à 10, dans lequel l'unité de commande électronique (MC) est conçue pour émettre une notification d'engorgement (V) dans le cas où le flux d'air ($\dot{V}$, $\dot{m}$) acquis devient inférieur à une valeur limite minimale prédéfinie ($\dot{V}-$, $\dot{m}-$) pour une durée minimale (ZR) prédéfinie.

12. Détecteur de fumée à aspiration (ASD) selon la revendication 11, dans lequel l'unité de commande électronique (MC) présente pour un accès lié aux données à la valeur limite supérieure et à la valeur limite inférieure ($\dot{V}+$, $\dot{m}+$ ; $\dot{V}-$,$\dot{m}-$) ainsi qu'à la valeur de flux d'air nominal (NW) et à la durée minimale (ZR) une mémoire non volatile (MEM), dans lequel la valeur limite supérieure ($\dot{V}+$, $\dot{m}+$) se monte à 1,2 fois et la valeur limite inférieure ($\dot{V}-$, $\dot{m}-$) se monte à 0,8 fois la valeur de flux d'air nominal (NW) enregistrée et dans lequel la durée minimale (ZR) présente une valeur de durée de 90 secondes ou 300 secondes.

13. Détecteur de fumée à aspiration (ASD) selon la revendication 11, dans lequel l'unité de commande électronique (MC) présente pour un accès lié aux données à la valeur limite supérieure et à la valeur limite inférieure ($\dot{V}+$, $\dot{m}+$ ; $\dot{V}-$,$\dot{m}-$) par rapport à la valeur de flux d'air nominal (NW) ainsi qu'à la durée minimale (ZR) une mémoire non volatile, dans lequel la valeur limite supérieure et la valeur limite inférieure ($\dot{V}+$, $\dot{m}+$ ; $\dot{V}-$,$\dot{m}-$) ainsi que la durée minimale (ZR) sont fixées dans une norme nationale, régionale ou internationale, avant tout par le biais de la norme européenne EN 54-20, de préférence avec la version de février 2009, ou par le biais de la norme UL268, de préférence à partir de la sixième ou de la septième version.

14. Produit de programme informatique (PRG) destiné à la mise en oeuvre du procédé de fonctionnement selon l'une quelconque des revendications 1 à 6 sur une unité de commande électronique (MC) d'un détecteur de fumée à aspiration (ASD), dans lequel l'unité de commande électronique (MC) présente une mémoire électronique (MEM) destinée à l'enregistrement du produit de programme informatique (PRG) ainsi qu'à l'enregistrement de la valeur de niveau de signal minimale (MIN) et de la valeur de flux d'air nominal (NW) en tant que paramètres de fonctionnement (PAR), ainsi que le cas échéant à l'enregistrement de la valeur limite supérieure ($\dot{V}+$, $\dot{m}+$) pour le flux d'air ($\dot{V}$, $\dot{m}$), de la valeur limite inférieure ($\dot{V}-$, $\dot{m}-$) pour le flux d'air ($\dot{V}$, $\dot{m}$) et/ou de la durée minimale (ZR) en tant que paramètres de fonctionnement (PAR) supplémentaires.

FIG 1

FIG 2

FIG 3

## IN DER BESCHREIBUNG AUFGEFÜHRTE DOKUMENTE

**In der Beschreibung aufgeführte Patentdokumente**

- EP 2244236 A1

- EP 2407946 A1